# EUROPÄISCHE PATENTSCHRIFT

(11) **EP 3 096 987 B1**
(45) Veröffentlichungstag und Bekanntmachung des Hinweises auf die Patenterteilung: **12.09.2018**
(21) Anmeldenummer: 14809295.0
(22) Anmeldetag: 04.12.2014
(51) Int. Cl.: B60S 1/34

(54) **WISCHEINRICHTUNG UND VERFAHREN ZUM WISCHEN**
WIPER SYSTEM AND METHOD FOR WIPING
SYSTEME D'ESSUIE GLACE ET PROCEDE D'ESSUYAGE

(30) Priorität: 04.12.2013 DE 102013018143
(43) Veröffentlichungstag der Anmeldung: 30.11.2016
(73) Patentinhaber: Hess, Felix, 04416 Markkleeberg (DE)
(72) Erfinder: Hess, Felix, 04416 Markkleeberg (DE)
(74) Vertreter: Hecht, Jan-David
(86) Internationale Anmeldenummer: PCT/EP2014/003236
(87) Internationale Veröffentlichungsnummer: WO 2015/082072

(56) Entgegenhaltungen:
- EP-A2- 0 939 014
- DE-A1- 10 010 754
- DE-U1-202009 014 698
- FR-A1- 2 827 241

## Beschreibung

Die vorliegende Erfindung betrifft eine Wischeinrichtung nach dem Oberbegriff von Anspruch 1 und ein Verfahren zum Wischen nach dem Oberbegriff von Anspruch 11.
Solche Wischeinrichtungen sind für Frontscheiben bei Fahrzeugen, Flugzeugen und Wasserfahrzeugen, insbesondere bei Automobilen und Schienenfahrzeugen sehr gebräuchlich. Allerdings werden solche Wischeinrichtungen auch bei stationären Fenstern eingesetzt, beispielsweise bei Schutzeinrichtungen, wie für Brennöfen und dgl. Im Folgenden wird daher einheitlich von "Durchblickmitteln" gesprochen.
Bekannt sind für Fahrzeuge beispielsweise Wischeinrichtungen, bei denen zwei gleichlaufende Wischer, zwei gegenläufige Wischer, ein Einarmwischer, ein oder zwei Parallelogrammwischer, verwendet werden, wobei die die Wischer unten oder oben angeschlagen sein können und deren Ruhepositionen oben, unten oder seitlich liegen können.
Solche Wischeinrichtungen sind mit zahlreichen Nachteilen behaftet. So besteht nach wie vor eine nur unvollständige Abdeckung der zu wischen Fläche. Hier wird zwar mit Hubsteuerungen und Parallelogrammführungen eine gewisse Verbesserung erzielt, die jedoch immer noch keine vollständige Wischfläche ermöglicht.
Andererseits besteht bei den bekannten Wischeinrichtungen für Fahrzeuge eine relativ große Abhängigkeit der Wischleistung von der Geschwindigkeit des Fahrzeugs, wobei auch relativ starke Windgeräusche durch die Wischeinrichtungen verursacht werden.
Außerdem bilden sich bei den bekannten Wischeinrichtungen an den jeweiligen Endstellungen der Wischer Schneewülste, die durch die Wischeinrichtungen nicht mehr beseitigbar sind. Dokument EP 0 939 014 offenbart eine Wischeinrichtung für Durchblickmittel von Fahrzeugen gemäß den Oberbegriff des Anspruchs 1. Es ist daher Aufgabe der vorliegenden Erfindung, eine Wischeinrichtung und ein Verfahren zum Wischen zur Verfügung zu stellen, mit denen zumindest einer der oben genannten Nachteile reduziert, insbesondere überwunden wird. Dabei soll vorzugsweise nicht nur das Wischen bei Fahrzeugen sondern auch bei stationären Objekten ermöglicht sein. Außerdem soll die Lösung insbesondere konstruktiv einfach, kostengünstig und sich dem Design des Fahrzeugs bzw. stationären Objektes leicht anpassbar sein.
Diese Aufgabe wird gelöst mit der erfindungsgemäßen Wischeinrichtung nach Anspruch 1 und dem Verfahren zum Wischen nach Anspruch 11. Vorteilhafte Weiterbildungen sind in den abhängigen Unteransprüchen aufgeführt.
Der Erfinder hat erkannt, dass sich diese gestellte Aufgabe in überraschender Weise dadurch lösen lässt, dass zumindest ein Wischer im Wesentlichen in einer Erstreckung des Durchblickmittels verfahren wird. Dabei muss der Wischer selbst nicht bzw. nicht immer senkrecht zu dieser Erstreckung des Durchblickmittels ausgerichtet sein, es genügt die Bewegung entlang der Erstreckung des Durchblickmittels, um eine im Wesentlichen vollständige Säuberung des Durchblickmittels zu ermöglichen Die erfindungsgemäße Wischeinrichtung für Durchblickmittel von Fahrzeugen, Schutzeinrichtungen und dgl. mit zumindest einem Wischer, der mit einem Verbindungsmittel an einer Antriebsvorrichtung angeordnet ist, zeichnet sich dadurch aus, dass die Antriebsvorrichtung zumindest einen Antriebsabschnitt mit einer Längserstreckung aufweist, wobei die Antriebsvorrichtung ausgebildet ist, eine Linearbewegung des Verbindungsmittels entlang zumindest eines Teils der Längserstreckung des Antriebsabschnittes vorzunehmen.
Während bei üblichen Wischeinrichtungen stets eine Drehbewegung eines solchen Verbindungsmittels erfolgt bzw. bei Hubsteuerungen eine Exzenterbewegung ausgeführt wird, erfolgt bei der erfindungsgemäßen Wischeinrichtung eine Linearbewegung entlang des Antriebsabschnittes, d.h. dass eine reine Translationsbewegung des Verbindungsmittels an dem Antriebsabschnitt erfolgt.

Damit wird dem Wischer eine Wischrichtung vorgegeben, die unabhängig von der Stellung des Wischers besteht. Bei einer horizontal verlaufenden Wischrichtung kann der Wischer kann also beispielsweise vertikal ausgerichtet an dem Durchblickmittel anliegen oder auch gegenüber der Vertikalen geneigt. Es können auch zusätzlich zur horizontalen Wischrichtung vertikale Wischrichtungsbestandteile vorliegen, solange auch horizontale Wischrichtungsbestandteile bestehen.

Besonders zweckmäßig sind die Antriebsabschnitte in Bezug auf das Durchblickmittel starr angeordnet, weil dann eine sehr stabile Führung des Wischers gewährleistet wird.

Bevorzugt ist die Antriebsvorrichtung so ausgebildet, um das Verbindungsmittel zumindest bereichsweise in einer zumindest horizontalen Richtung zu transportieren (Horizontalantrieb). Dann können Durchblickmittel mit einer größeren Breite als Höhe leichter gewischt werden. Alternativ kann natürlich auch ein Vertikalantrieb, also der Transport des Verbindungsmittels in zumindest einer vertikalen Richtung, verwendet werden, wenn die Höhe des Durchblickmittels größer ist als dessen Breite.

Besonders bevorzugt ist vorgesehen, dass die Antriebsabschnitte gerade und/oder gebogen ausgebildet sind, wobei sie sich in einer im Wesentlichen horizontalen Richtung erstrecken können. Bei einer gebogenen Ausbildung des Antriebsabschnittes überlagern sich horizontale mit vertikalen Wischrichtungsbestandteilen, wodurch eine bessere Anpassung an komplizierte Geometrien von Durchblickmitteln ermöglicht wird. Auch bei einer solchen gebogenen Ausbildung erfolgt eine reine Translationsbewegung des Verbindungsmittels entlang des Antriebsabschnittes.

In einer vorteilhaften Weiterbildung ist vorgesehen, dass sich die Antriebsabschnitte entlang zumindest eines Viertels, vorzugsweise zumindest einer Hälfte, höchst bevorzugt zumindest eines Dreiviertels des Durchblickmittels, insbesondere des ganzen Durchblickmittels erstrecken. Dadurch wird mit einem Wischer ein sehr großer Bereich gewischt.
Zweckmäßig ist vorgesehen, dass der Wischer an einem der Antriebseinrichtung zugeordneten Ende ein entgegengesetztes Ende aufweist, das an einer Führung, bevorzugt gleitend angeordnet ist. Dann erfolgt ein sehr stabiler Transport des Wischers entlang des Durchblickmittels.
Besonders bevorzugt ist der Wischer teleskopierbar ausgebildet, weil dadurch nicht parallel zur Horizontale bzw. Vertikale, beispielsweise gebogen verlaufende Antriebsabschnitte ausgeglichen werden können, zum Beispiel, wenn das Durchblickmittel selbst eine gebogene Geometrie aufweist. Dabei ist der Wischer insbesondere so ausgebildet, dass unabhängig vom Teleskopiergrad des Wischers zumindest ein Wischblatt des Wischers an dem Durchblickmittel anliegt.
In einer besonders vorteilhaften Weiterbildung ist vorgesehen, dass der Wischer an der Antriebsvorrichtung in einer Ebene parallel zum Durchblickmittel verschwenkbar angeordnet ist, wobei insbesondere ein Verschwenkungsantrieb vorgesehen ist. Dadurch kann der Wischer Verschwenkungsbewegungen gegenüber der horizontalen Wischrichtung vollführen, wobei dies passiv oder mittels des Verschwenkungsantriebs auch aktiv erfolgen kann.

In der Erfindung ist vorgesehen, dass die Wischeinrichtung angepasst ist, den Wischer zumindest entlang eines Teils der Wischbahn in zumindest zwei unterschiedliche Stellungen auf der Wischbahn so zu verschwenken, dass der Wischer jeweils parallel zu einer anströmenden Strömung ausgerichtet ist. Die Verschwenkung erfolgt bevorzugt mittels des Verschwenkungsantriebs. Weiterhin kann vorteilhaft ein Messmittel für die Strömungsrichtung vorgesehen sein und Steuermittel, die Verschwenkung in Abhängigkeit von der Strömungsrichtung so zu steuern, dass der Wischer automatisch parallel zur Strömungsrichtung ausgerichtet wird. Alternativ oder zusätzlich können Mittel vorgesehen sein, die Verschwenkung in Abhängigkeit von der Fahrzeuggeschwindigeit so anzupassen, dass der Wischer parallel zur Strömungsrichtung ausgerichtet ist.

In der Erfindung ist vorgesehen, dass die Wischeinrichtung angepasst ist, die Ausrichtung des Wischers so zu verändern, dass ein solcher Impuls auf Wischgut, insbesondere Schnee, übertragen wird, der zu einer Entfernung des Wischgutes von dem Durchblickmittel führt und/oder den Wischer durch VErkippung oder Benützung der Teleskopfunktion so zu verschwenken, dass auch bei komplizierten Geometriën des Durchblickmittels eine im wesetnlichen vollständige Wischfläche erzielt wird. Die Änderung der Ausrichtung erfolgt dabei gegenüber der Vertikalen und insbesondere abrupt oder in sonstiger geeigneter Weise. Bei dem Wischgut kann es sich neben Schnee auch um Hagel, Starkregen, Schmutz und dgl. handeln. Die Ausrichtung des Wischers erfolgt dabei insbesondere abrupt. Vorzugsweise sind Mess- und Steuermittel vorgesehen, die den Widerstand auf den Wischer durch das Wischgut bestimmen und bei Überschreiten eines festgelegten Widerstands den Impuls auslösen und dabei dessen Größe so anpassen, dass das Wischgut entfernt wird.
Zweckmäßig ist eine das Sichtfeld des Durchblickmittels freigebende, bevorzugt beheizt und/oder geschützt ausgebildete Parkstellung für den Wischer vorgesehen ist. Dadurch stört der Wischer bei Nichtgebrauch nicht das Sichtfeld und er trägt auch nicht zur Erhöhung des Luftwiderstandes bei. Eine solche Parkstellung kann bevorzugt an der Seite oder am unteren Ende des Durchblickmittels vorgesehen sein und insbesondere mittels des Verschwenkungsantriebs angesteuert werden. Unabhängiger Schutz wird beansprucht für das erfindungsgemäße Verfahren zum Wischen von Durchblickmitteln von Fahrzeuge, Schutzeinrichtungen und dgl. mit zumindest einem Wischer, der mit einem Verbindungsmittel an einer Antriebsvorrichtung angeordnet ist, das sich dadurch auszeichnet, dass eine Antriebsvorrichtung mit zumindest einem Antriebsabschnitt verwendet wird, wobei der Antriebsabschnitt eine Längserstreckung aufweist, wobei das Verbindungsmittel entlang zumindest eines Teils der Längserstreckung linear verschoben wird.

In einer vorteilhaften Weiterbildung ist vorgesehen, dass c) der Wischer zumindest entlang eines Teils seiner Wischbahn in zumindest zwei unterschiedliche Stellungen auf der Wischbahn so verschwenkt wird, dass der Wischer jeweils parallel zu einer anströmenden Strömung ausgerichtet ist und/oder d) die Ausrichtung des Wischers so verändert wird, dass ein solcher Impuls auf Wischgut, insbesondere Schnee, übertragen wird, der zu einer Entfernung des Wischgutes von dem Durchblickmittel führt.

Im Rahmen der vorliegenden Erfindung wird davon ausgegangen, dass sich das Durchblickmittel mit seinen Hauptseiten parallel zur Horizontalen bzw. Vertikalen erstreckt. Wenn das Durchblickmittel verkippt angeordnet ist, muss die erfindungsgemäße Wischeinrichtung ebenfalls entsprechend verkippt angeordnet werden.

Die Kennzeichen der vorliegenden Erfindung und weitere Vorteile werden im Folgenden anhand der Beschreibung dreier bevorzugter Ausführungsbeispiele verdeutlicht werden. Dabei zeigen rein schematisch:
- Fig. 1: eine erste bevorzugte Ausgestaltung der erfindungsgemäßen Wischeinrichtung
- Fig. 2: die erfindungsgemäße Wischeinrichtung nach Fig. 1 in verschiedenen strömungsangepassten Betriebsstellungen,
- Fig. 3: die erste bevorzugte Ausgestaltung der erfindungsgemäßen Wischeinrichtung nach Fig. 1 in verschiedenen Parkstellungen,
- Fig. 4: eine zweite bevorzugte Ausgestaltung der erfindungsgemäße Wischeinrichtung in verschiedenen Schnee abweisenden Betriebsstellungen und
- Fig. 5: eine dritte bevorzugte Ausgestaltung der erfindungsgemäßen Wischeinrichtung in verschiedenen Wischzuständen.

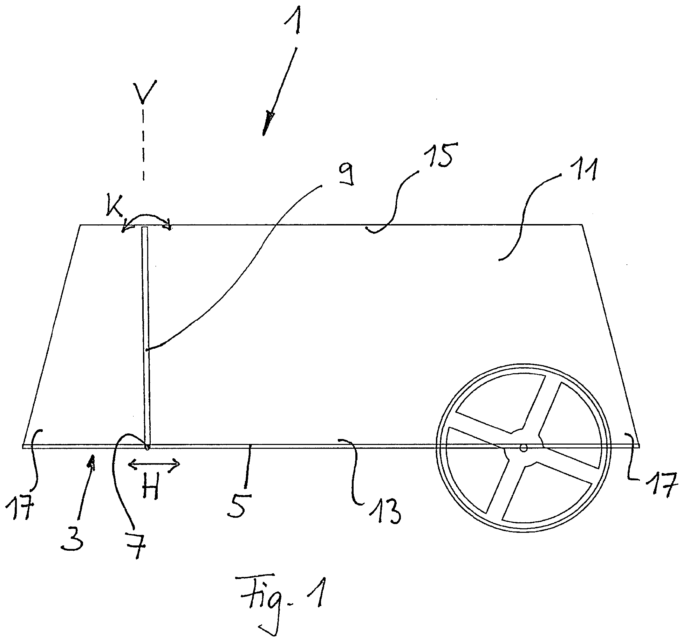

In den Figuren 1 bis 3 ist rein schematisch eine erste bevorzugte Ausgestaltung der erfindungsgemäßen Wischeinrichtung 1 in verschiedenen Betriebsstellungen gezeigt.

In Fig. 1 ist zu erkennen, dass die erfindungsgemäße Wischeinrichtung 1 eine Antriebsvorrichtung 3 aufweist, die einen starr angeordneten horizontal verlaufenden Antriebsabschnitt 5 aufweist, an dem ein Verschwenkungsantrieb 7 transportierbar angeordnet ist. Der Verschwenkungsantrieb 7 ist dabei an einem Verbindungsmittel (nicht gezeigt) angeordnet, das wiederum an dem Antriebsabschnitts 5 angeordnet ist. An diesem Verschwenkungsantrieb 7 wiederum ist ein Wischer 9 angeordnet. Dadurch kann der Wischer 9 entlang des Antriebsabschnitts 5 horizontal gegenüber der Frontscheibe 11 eines nicht weiter dargestellten Fahrzeugs verfahren werden. Es handelt sich dadurch um eine horizontale Wischrichtung H, die der Längserstreckung des Antriebsabschnitts 5 entspricht. Zusätzlich kann der Wischer 9 gegenüber dem Antriebsabschnitt 5 mittels des Verschwenkungsantriebs 7 verschwenkt K, also gegenüber der in Fig. 1 gezeigten vertikalen Ausrichtung V des Wischers 9 verschwenkt K werden.

Der Transport des Verbindungsmittels, das beispielsweise als Schlitten ausgebildet werden kann, an dem Antriebsabschnitt 5 kann beispielsweise dadurch erfolgen, dass der Antriebsabschnitt 5 als Schneckenantrieb ausgebildet ist. Es sind aber auch geeignete elektromagnetische, hydraulische oder pneumatische Antrieb möglich, solange sie den Transport des Verschwenkungsantriebs 7 an dem Antriebsabschnitt 5 gestatten.

Der Verschwenkungsantrieb 7 ist vorgesehen, um bestimmte Betriebsstellungen des Wischers 9 zu ermöglichen, wobei auch ein folgen komplizierter Scheibengeometrien ermöglicht wird. Im vorliegenden Fall einer Frontscheibe 11 mit parallel verlaufender Unter- 13 und Oberseite 15 kann der Wischer 9 in vertikaler Ausrichtung V entlang der Erstreckung der Oberseite 15 transportiert werden und nur zum Erreichen der durch die überstehende Unterseite 13 ausgebildeten Ecken 17 ist ein Verschwenken K des Wischers 9 notwendig, wodurch die gesamte Fläche der Frontscheibe 11 mit einem einzigen Wischer 9 gewischt werden kann.

Weiterhin könnte alternativ auch vorgesehen sein, dass statt eines aktiven Verschwenkungsantriebs 7, der beispielsweise in Form eines Linearmotors ausgebildet ist, ein passives Verschwenkungsgelenk (nicht gezeigt) verwendet wird, womit bestimmte Voreinstellungen der Verschwenkung K des Wischers 9 gegenüber der Vertikalen V ermöglicht werden, wenn eine stets gleichbleibende Ausrichtung des Wischers 9 ausreichend für einen gut Wischerfolg ist.

Wenn die Scheibengeometrie es nicht erforderlich macht, oder um die Wischeinrichtung 1 sehr kostengünstig und einfach aufgebaut zu gestalten, kann ein Verschwenkungsantrieb 7 bzw. ein Verschwenkungsgelenk auch gänzlich entfallen.

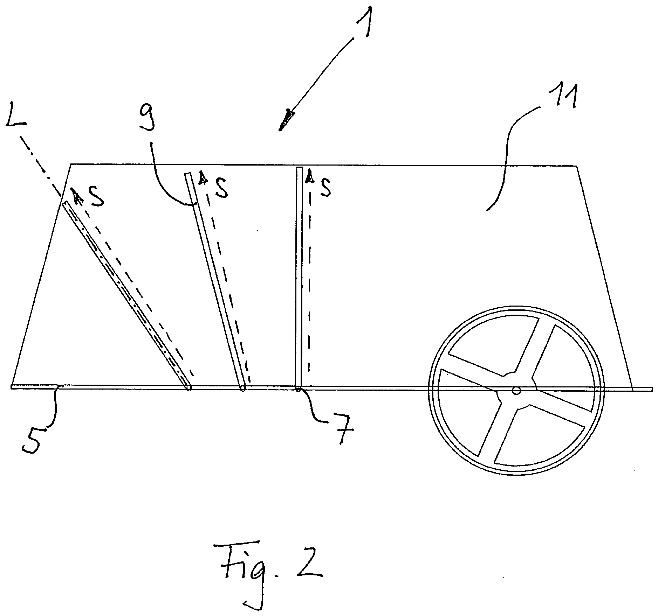

Um ein Abheben des Wischers 9 im Fahrbetrieb des Fahrzeugs zu verhindern und damit die Wischleistung zu erhöhen, und um gleichzeitig den Luftwiederstand des Fahrzeugs zu verringern ist nach Fig. 2 vorgesehen, dass die Verkippung K des Wischers 9 gegenüber der vertikalen Ausrichtung V in Abhängigkeit von der tatsächlich an der Frontscheibe 11 anfallen Luftströmung S so gewählt wird, dass der Wischer 9 mit seiner Längserstreckung L parallel zur Strömungsrichtung S ausgerichtet wird. Die "vertikale Ausrichtung" bezieht sich dabei nicht auf den Erdmittelpunkt, sondern auf den an der Frontscheibe 11 anliegenden Wischer 9.

Zur Bestimmung der Strömungsrichtung S können geeignete Sensoren (nicht gezeigt) vorgesehen werden, die mittels einer geeigneten Steuerung (nicht gezeigt) die Ausrichtung des Wischers 9 gezielt einstellen. Andererseits können im Vorfeld auch Messungen der zu erwartenden Strömungsrichtungen S vorgenommen werden, so dass die Ausrichtung K des Wischers 9 in Abhängigkeit der Stellung des Verschwenkungsantriebs 7 auf dem Antriebsabschnitt 5 kontrolliert wird, wobei diese Kontrolle vorzugsweise auch mit der Fahrzeuggeschwindigkeit korreliert wird.

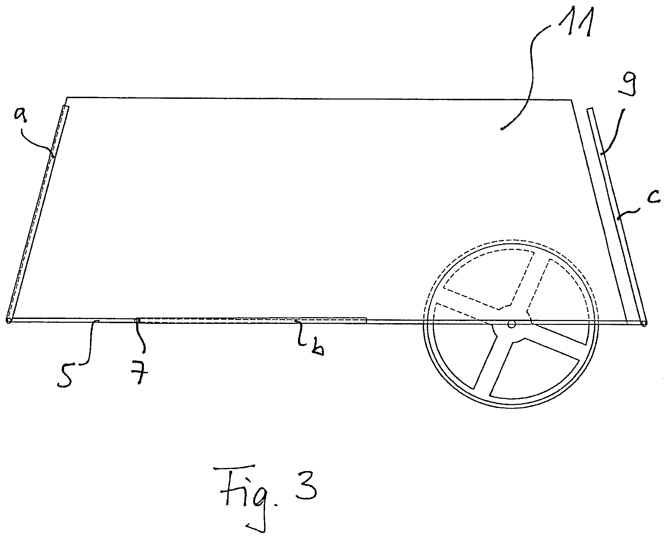

In Fig. 3 sind verschiedene mögliche Parkstellungen für den Wischer 9 gezeigt. Es ist zu erkennen, dass grundsätzlich Parkstellungen a, b bevorzugt werden, bei denen eine Freigabe des durchsehbaren Frontscheibenbereichs vorliegt, so dass der Wischer 9 bei Nichtgebrauch nicht das Sichtfeld des Fahrers einschränkt. Allerdings wird eine Parkstellung c bevorzugt, die geschützt hinter einer Verkleidung (nicht gezeigt) ausgebildet ist. Dadurch kann der Wischer 9 zum einen gegenüber Witterungseinflüssen geschützt werden, wodurch sich seine Lebensdauer erhöht. Andererseits kann in dieser Parkstellung c auch eine Heizeinrichtung (nicht gezeigt) vorgesehen werden, um den Betrieb im Winter zu verbessern.

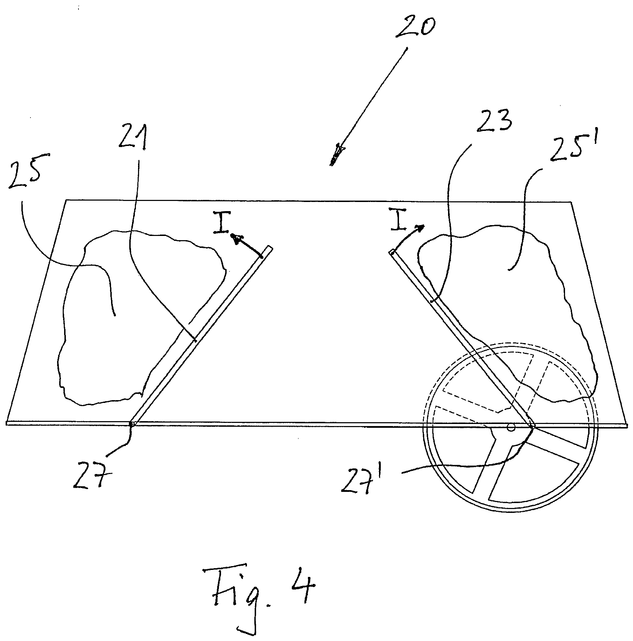

In Fig. 4 ist eine zweite bevorzugte Ausgestaltung der erfindungsgemäßen Wischeinrichtung 20 gezeigt, die zwei Wischer 21, 23 aufweist, um die Fläche der Frontscheibe 11 in kürzerer Zeit oder mit geringeren Transportgeschwindigkeiten des Wischers 9 am Antriebsabschnitt 5 zu ermöglichen. Alternativ hierzu können auch mehr als zwei Wischer verwendet werden (nicht gezeigt), um beispielsweise sehr breite Scheibenflächen wischen.

Mit der in Fig. 4 gezeigten Ausrichtung der beiden Wischer 21, 23 lässt sich Wischgut 25, 25' auf der Frontscheibe leichter entfernen, als dies sonst der Fall ist. In dem dargestellten Beispiel handelt es sich um Schnee 25, 25', der sich auf der Frontscheibe 11 ansammelt und durch die Wischbewegungen der Wischer 21, 23 nach Außen gedrängt wird. Allerdings würde der Schnee 25, 25' normalerweise nicht von der Frontscheibe 11 entfernt werden können, da der beiseitegeschobene Schnee 25, 25' zwischen Wischer 21, 23 und einem neben der Frontscheibe aus aerodynamischen Grünen häufig vorgesehenen Vorsprung (nicht gezeigt) des Fahrzeugaufbaus eingeklemmt wird.

Hier setzt nun die erfindungsgemäße Wischeinrichtung 20 an, die in der in Fig. 4 gezeigten Betriebsstellung der Wischer 21, 23 den Schnee 25, 25' nicht einfach weiterschiebt, sondern mittels des Verschwenkungsantriebs 27, 27' einen solchen Impuls I auf den Schnee 25, 25' überträgt, dass der Schnee 25, 25' von der Frontscheibe 11 nach außen weggeschleudert wird. Dies wird dadurch erleichtert, dass die Frontscheibe 11 zumeist konvex gewölbt ausgebildet ist, so dass der Schnee 25, 25' tangential von der Frontscheibe 11 weggeschleudert wird und so den Vorsprung des Fahrzeugaufbaus überwinden kann. Zur Übertragung eines hinreichend großen Impulses I auf das Wischgut 25, 25' ist ein entsprechend kräftiger und dynamischer Verschwenkungsantrieb 27, 27' vorzusehen.

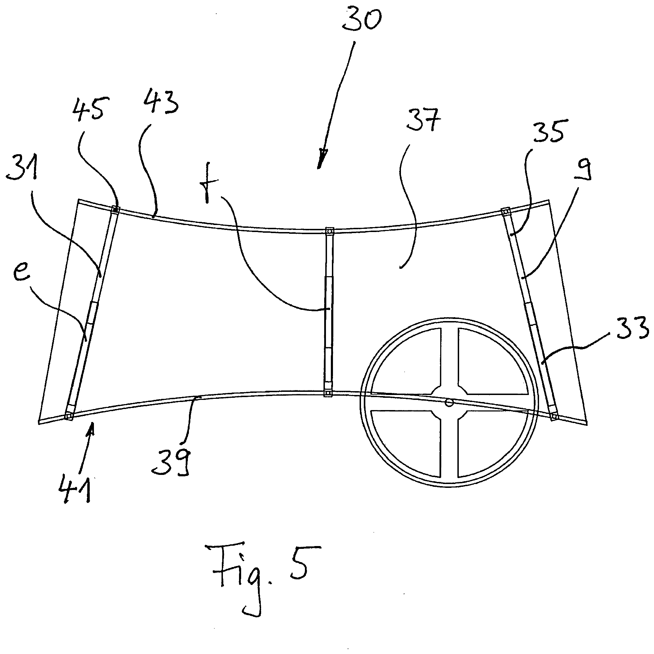

In Fig. 5 ist eine dritte bevorzugte Ausgestaltung der erfindungsgemäßen Wischeinrichtung 30 rein schematisch in drei unterschiedlichen Betriebsstellungen e, f, g gezeigt. Es ist zu erkennen, dass bei dieser Ausgestaltung der Wischer 31 teleskopierbar ausgebildet ist. Dazu könnte beispielsweise vorgesehen sein, dass der Wischer 31 zwei Wischblätter (nicht gezeigt) aufweist, die versetzt zueinander an den Teleskopierelementen 33, 35 des Wischers 31 angeordnet sind, so dass unabhängig vom Teleskopiergrad des Wischers 31 zumindest ein Wischblatt entlang des Wischers 31 an der Frontscheibe 37 anliegt. Es könnten auch zwei Doppel- oder Mehrfachwischblätter (nicht gezeigt) vorgesehen sein, die versetzt und verschränkt angeordnet sind, deren Einzelwischer also ineinandergreifen. Bei den versetzten Einzelwischblättern oder den Mehrfachwischblättern ist die Länge des Versetzungs- bzw. Verschränkungsabschnitts so eingestellt, dass für jeden möglichen Teleskopiergrad, bei dem die Wischblätter und parallel zu einander gegeneinander verlagert werden, über der Frontscheibe 37 eine Überlappung zwischen den versetzt angeordneten Wischblättern besteht.

Durch diese besondere Ausgestaltung kann der Wischer 31 auch einer komplizierten Geometrie der Frontscheibe 37 folgen, wodurch ein im Wesentlichen vollständiges Wischen der Frontscheibe 37 erreicht wird.

Hier ist der Antriebsabschnitt 39 der Antriebsvorrichtung 41 zwar gebogen ausgebildet, jedoch wird eine horizontale Wischrichtung H des Wischers 31 bewirkt. Gegenüberliegend zu dem Antriebsabschnitt 39 ist ein Gleitabschnitt 43 vorgesehen. D.h. dass der Transport des Wischers 31 mittels des Antriebsabschnitts in vorbeschriebener Weise erfolgt und die Verschwenkung des Wischers 31 mittels des Verschwenkungsantriebs 7 durchgeführt wird. Die am Wischer 31 angeordneten Führungsmittel 45 führen den Wischer 31 an dem Gleitabschnitt 35 und dadurch wird automatisch der Teleskopiergrad des Wischers 31 eingestellt.

Alternativ kann auch vorgesehen sein, dass statt des oberen Gleitabschnitts 43 ein weiterer Antriebsabschnitt (nicht gezeigt) vorgesehen ist. Dann ist ein gesonderter Verschwenkungsantrieb entbehrlich und die Verschwenkung K des Wischers 31 wird gezielt über gleiche bzw. unterschiedliche Transportgeschwindigkeiten des Wischers 31 an den Antriebsabschnitten eingestellt.

Diese Teleskopierbarkeit könnte alternativ auch ohne Führungsmittel 45 und Gleitabschnitt 43 erreicht werden, wenn der Wischer 31 einen separaten Antrieb (nicht gezeigt) für die Teleskopierfunktion aufweist.

Die Verwendung eines teleskopierbaren Wischers beispielsweise kann auch vorteilhaft für die Strömungskontrolle nach Fig. 2 sein, da dann stets eine vollflächige Wischfunktion erzielt wird.

Im Rahmen der vorliegenden Erfindung können sämtliche Merkmale der Erfindung ohne weiteres mit einander kombiniert werden, soweit nicht etwa anderes vermerkt ist. In diesem Zusammenhang können auch bestimmte Merkmale der im Zusammenhang mit den Fig. 1 bis 5 als vorteilhaft beschriebenen Ausführungsbeispiele als Merkmale der Erfindung herausgegriffen werden, ohne die weiteren speziellen Merkmale der einzelnen konkret beschriebenen Ausführungsbeispiele mit zu verwenden. Dabei können Merkmale des erfindungsgemäßen Verfahrens auch als Merkmale der Wischeinrichtung Verwendung finden und umgekehrt.

Aus der vorstehenden Darstellung ist deutlich geworden, dass mit der vorliegenden Erfindung eine Wischeinrichtung bereit gestellt wird, mit der im Wesentlichen eine vollständige Abdeckung der zu wischenden Fläche ermöglicht wird. Dabei ist es möglich, die Wischleistung auch bei großen Geschwindigkeiten hoch zu halten und zugleich starke Windgeräusche zu vermeiden und den Luftwiderstand von Fahrzeugen zu senken. Schließlich kann mittels der erfindungsgemäßen Wischeinrichtung auch Wischgut, insbesondere Schnee, sehr effizient beseitigt werden.

Einige Vorteile der erfindungsgemäßen Wischeinrichtung sollen hier noch einmal zusammengefasst werden:
Der Wischer erreicht durch den Horizontalantrieb für rechteckige Durchblickmittel eine im Wesentlichen vollständige Wischfläche ohne eine zusätzliche Verkippung vornehmen zu müssen.

Bei komplizierteren Geometrien des Durchblickmittels kann durch Verkippung des Wischers und/oder durch Nutzung der Teleskopfunktion eine im Wesentlichen vollständige Wischfläche erzielt werden.

Für bestimmte Betriebszustände kann die Verkippung des Wischers dynamisch verändert werden, etwa um bei Fahrt die Ausrichtung des Wischers parallel zur Strömungsrichtung zu halten bzw. einen Impuls auf Wischgut zu dessen Beseitigung zu übertragen.

Auch bei großen und kompliziert geformten Durchblickmitteln genügt ein einziger Wischer.

Die horizontale Bewegung des Wischers und dessen Verschwenkung kann beliebig eingestellt werden.

Der Wischer kann sehr einfach in Parkstellungen überführt und dort geschützt von Umwelteinflüssen sowie ggf. beheizt bei Nichtgebrauch gelagert werden.

### Bezugszeichenliste

- 1: erste Ausgestaltung der erfindungsgemäßen Wischeinrichtung
- 3: Antriebsvorrichtung
- 5: Antriebsabschnitt
- 7: Verschwenkungsantrieb
- 9: Wischer
- 11: Frontscheibe
- H: horizontale Wischrichtung des Wischers
- 13: Unterseite
- 15: Oberseite
- V: vertikale Ausrichtung des Wischers
- 17: Ecken
- K: Verschwenkung des Wischers
- S: Luftströmung
- L: Längserstreckung des Wischers
- a, b, c: Parkstellungen des Wischers
- 20: zweite Ausgestaltung der erfindungsgemäßen Wischeinrichtung
- 21, 23: Wischer
- 25, 25': Wischgut, Schnee
- 27, 27': Verschwenkungsantrieb
- I: Impuls
- 30: dritte Ausgestaltung der erfindungsgemäßen Wischeinrichtung
- e, f, g: Betriebsstellungen
- 31: Wischer
- 33, 35: Teleskopierelemente des Wischers
- 37: Frontscheibe
- 39: Antriebsabschnitt
- 41: Antriebsvorrichtung
- 43: Gleitabschnitt
- 45: Führungsmittel

## Patentansprüche

1. Wischeinrichtung (1) für Durchblickmittel von Fahrzeugen, Schutzeinrichtungen und dgl. mit zumindest einem Wischer, der mit einem Verbindungsmittel an einer Antriebsvorrichtung (3) angeordnet ist, wobei die Antriebsvorrichtung zumindest einen Antriebsabschnitt (5) mit einer Längserstreckung aufweist, wobei die Antriebsvorrichtung ausgebildet ist, eine Linearbewegung des Verbindungsmittels entlang zumindest eines Teils der Längserstreckung des Antriebsabschnittes vorzunehmen, **dadurch gekennzeichnet, dass** die Wischeinrichtung angepasst ist,
- den Wischer zumindest entlang eines Teils seiner Wischbahn in zumindest zwei unterschiedliche Stellungen auf der Wischbahn so zu verschwenken, dass der Wischer jeweils parallel zu einer anströmenden Strömung ausgerichtet ist,
- die Ausrichtung des Wischers so zu verändern, dass ein solcher Impuls auf Wischgut, insbesondere Schnee, übertragen wird, der zu einer Entfernung des Wischgutes von dem Durchblickmittel führt und/oder
- den Wischer durch Verkippung oder Benützung der Teleskopfunktion so zu verschwenken, dass auch bei komplizierten Geometrien des Durchblickmittels eine im Wesentlichen vollständige Wischfläche erzielt wird.

2. Wischeinrichtung nach Anspruch 1, **dadurch gekennzeichnet, dass** die Antriebsabschnitte in Bezug auf das Durchblickmittel starr angeordnet sind.

3. Wischeinrichtung nach Anspruch 1 oder 2, **dadurch gekennzeichnet, dass** die Antriebsvorrichtung ausgebildet ist, das Verbindungsmittel zumindest bereichsweise in einer zumindest horizontalen Richtung zu transportieren.

4. Wischeinrichtung nach einem der vorherigen Ansprüche, **dadurch gekennzeichnet, dass** die Antriebsabschnitte sich entlang zumindest eines Viertels, vorzugsweise zumindest einer Hälfte, höchst bevorzugt zumindest eines Dreiviertels des Durchblickmittels, insbesondere des ganzen Durchblickmittels erstrecken.

5. Wischeinrichtung nach einem der vorherigen Ansprüche, **dadurch gekennzeichnet, dass** der Wischer an einem der Antriebseinrichtung zugeordneten Ende ein entgegengesetztes Ende aufweist, das an einer Führung, bevorzugt gleitend angeordnet ist.

6. Wischeinrichtung nach einem der vorherigen Ansprüche, **dadurch gekennzeichnet, dass** der Wischer teleskopierbar ausgebildet ist, wobei der Wischer bevorzugt so ausgebildet ist, dass unabhängig vom Teleskopiergrad des Wischers zumindest ein Wischblatt des Wischers an dem Durchblickmittel anliegt, wobei insbesondere zumindest zwei Einzel- oder Mehrfachwischblätter vorgesehen sind, die versetzt zueinander angeordnet und parallel zu einander gegeneinander verlagerbar sind.

7. Wischeinrichtung nach einem der vorherigen Ansprüche, **dadurch gekennzeichnet, dass** der Wischer an der Antriebsvorrichtung in einer Ebene parallel zum Durchblickmittel verschwenkbar angeordnet ist, wobei insbesondere ein Verschwenkungsantrieb vorgesehen ist.

8. Wischeinrichtung nach einem der vorherigen Ansprüche, **dadurch gekennzeichnet, dass**
a) Messmittel für die Strömungsrichtung vorgesehen sind und Steuermittel, die Verschwenkung in Abhängigkeit von der Strömungsrichtung so zu steuern, dass der Wischer automatisch parallel zur Strömungsrichtung ausgerichtet wird und/oder
b) Mittel vorgesehen sind, die Verschwenkung in Abhängigkeit von der Fahrzeuggeschwindigeit so anzupassen, dass der Wischer parallel zur Strömungsrichtung ausgerichtet ist.

9. Wischeinrichtung nach einem der vorherigen Ansprüche, **dadurch gekennzeichnet, dass** die Veränderung der Ausrichtung des Wischers abrupt erfolgt und/oder dass Mess- und Steuermittel vorgesehen sind, die den Widerstand auf den Wischer durch das Wischgut bestimmen und bei Überschreiten eines festgelegten Widerstands den Impuls auslösen und dabei dessen Größe so anpassen, dass das Wischgut entfernt wird.

10. Wischeinrichtung nach einem der vorherigen Ansprüche, **dadurch gekennzeichnet, dass** eine das Sichtfeld des Durchblickmittels freigebende, bevorzugt beheizt und/oder geschützt ausgebildete Parkstellung für den Wischer vorgesehen ist

11. Verfahren zum Wischen von Durchblickmitteln von Fahrzeuge, Schutzeinrichtungen und dgl. mit zumindest einem Wischer, der mit einem Verbindungsmittel an einer Antriebsvorrichtung angeordnet ist, wobei eine Antriebsvorrichtung mit zumindest einem Antriebsabschnitt verwendet wird, wobei der Antriebsabschnitt eine Längserstreckung aufweist, wobei das Verbindungsmittel entlang zumindest eines Teils der Längserstreckung linear verschoben wird, **dadurch gekennzeichnet, dass**
- der Wischer zumindest entlang eines Teils seiner Wischbahn in zumindest zwei unterschiedliche Stellungen auf der Wischbahn so verschwenkt wird, dass der Wischer jeweils parallel zu einer anströmenden Strömung ausgerichtet ist,
- die Ausrichtung des Wischers so verändert wird, dass ein solcher Impuls auf Wischgut, insbesondere Schnee, übertragen wird, der zu einer Entfernung des Wischgutes von dem Durchblickmittel führt, und/oder
- der Wischer so verschwenkt wird, dass auch bei komplizierten Geometrien des Durchblickmittels eine im Wesentlichen vollständige Wischfläche erzielt wird.

12. Verfahren nach Anspruch 11, **dadurch gekennzeichnet, dass** eine Wischeinrichtung entsprechend einem der Ansprüche 1 bis 9 verwendet wird.

## Claims

1. A wiper system (1) for viewing means of vehicles, protective systems and the like with at least one wiper, which is arranged on a drive device (3) with a connecting means, wherein said drive device has at least one drive section (5) with a longitudinal extension, wherein said drive device is configured to perform a linear movement of said connecting means along at least a portion of the longitudinal extension of said drive section, **characterised in that** the wiper system is adapted
- to pivot the wiper at least along a portion of its wiper path into at least two different positions on the wiper path so that said wiper is aligned parallel to an incoming flow in each case,
- to change the alignment of the wiper so that a pulse is transmitted to material to be wiped, particularly snow, such as to lead to a removal of the material to be wiped from the viewing means and/or
- to pivot the wiper by tilting or using the telescopic function so that, even in the case of complex geometries of the viewing means, a substantially complete wiped surface is achieved.

2. The wiper system according to claim 1, **characterised in that** the drive sections are arranged rigidly with respect to the viewing means.

3. The wiper system according to claim 1 or 2, **characterised in that** the drive device is configured to transport the connecting means at least partly in at least a horizontal direction.

4. The wiper system according to one of the preceding claims, **characterised in that** the drive sections extend along at least a quarter, preferably at least a half, most preferably at least three quarters of the viewing means and in particular the entire viewing means.

5. The wiper system according to one of the preceding claims, **characterised in that** the wiper has, at an end associated with the drive system, an opposite end which is arranged, preferably slidably, on a guide.

6. The wiper system according to one of the preceding claims, **characterised in that** the wiper is of telescopic configuration, said wiper preferably being configured so that regardless of the degree of telescoping of the wiper at least one wiper blade of the wiper lies against the viewing means, wherein in particular at least two single wiper blades or multiple wiper blades are provided which are arranged offset to one another and are displaceable relative to each other and parallel to each other.

7. The wiper system according to one of the preceding claims, **characterised in that** the wiper is arranged on the drive device pivotably in a plane parallel to the viewing means, wherein in particular a pivoting drive is provided.

8. The wiper system according to one of the preceding claims, **characterised in that**
a) measuring means for the flow direction are provided and control means to control the pivoting as a function of the flow direction so that the wiper is automatically aligned parallel to the flow direction and/or
b) means are provided to adapt the pivoting as a function of the vehicle speed so that the wiper is aligned parallel to the flow direction.

9. The wiper system according to one of the preceding claims, **characterised in that** the change in the alignment of the wiper takes place abruptly and/or that measuring and control means are provided which determine the resistance on the wiper by the material to be wiped and trigger the pulse when a specified resistance is exceeded while adjusting the size thereof so that the material to be wiped is removed.

10. The wiper system according to one of the preceding claims, **characterised in that** a preferably heated and/or protected parking position is provided for the wiper, which position leaves the field of view of the viewing means clear.

11. A method for wiping viewing means of vehicles, protective systems and the like with at least one wiper, which is arranged on a drive device with a connecting means, wherein a drive device with at least one drive section is used, wherein said drive section has a longitudinal extension, wherein said connecting means is linearly displaced along at least a portion of the longitudinal extension, **characterised in that**
- the wiper is pivoted into at least two different positions on the wiper path at least along a portion of said wiper path so that said wiper is aligned parallel to an incoming flow in each case,
- the alignment of the wiper is changed so that a pulse is transmitted to material to be wiped, particularly snow, such as to lead to a removal of the material to be wiped from the viewing means and/or
- the wiper is pivoted so that, even in the case of complex geometries of the viewing means, a substantially complete wiped surface is achieved.

12. The method according to claim 11, **characterised in that** a wiper system according to one of claims 1 to 9 is used.

## Revendications

1. Dispositif d'essuyage (1) pour des moyens de vue à travers de véhicules automobiles, dispositifs de protection et similaires avec au moins un essuie-glace qui est fixé avec un moyen d'attache sur un dispositif d'entraînement (3), ledit dispositif d'entraînement présentant au moins une section d'entraînement (5) avec une extension longitudinale, le dispositif d'entrainement étant conçu pour effectuer un mouvement linéaire du moyen d'attache le long au moins d'une partie de l'extension longitudinale de la section d'entraînement, **caractérisé en ce que** le dispositif d'essuyage est adapté
- pour faire pivoter l'essuie-glace au moins le long d'une partie de sa trajectoire d'essuyage dans au moins deux positions différentes sur la trajectoire d'essuyage de telle sorte que l'essuie-glace est aligné chaque fois parallèlement à un flux affluant,
- pour modifier l'alignement de l'essuie-glace de telle sorte qu'une telle impulsion est transmise à la matière à essuyer, en particulier la neige, et conduit à une enlèvement de la matière à essuyer du pare-brise et/ou
- pour déplacer l'essuie-glace, par pivotement ou par utilisation de la fonction télescopique de sorte à obtenir une surface à essuyer pratiquement complète même avec un pare-brise avec des géométries compliquées.

2. Dispositif d'essuyage selon la revendication 1, **caractérisé en ce que** les sections d'entraînement sont disposées de manière rigide par rapport au pare-brise.

3. Dispositif d'essuyage selon la revendication 1 ou 2, **caractérisé en ce que** le dispositif d'entraînement est conçu de sorte à transporter le moyen d'attache, du moins par zones, dans une direction au moins horizontale.

4. Dispositif d'essuyage selon l'une quelconque des revendications précédentes, **caractérisé en ce que** les sections d'entraînement s'étendent le long d'au moins un quart, de préférence d'au moins la moitié, de haute préférence d'au moins trois quarts du moyen de vue à travers, en particulier de la totalité du pare-brise.

5. Dispositif d'essuyage selon l'une quelconque des revendications précédentes, **caractérisé en ce que** l'essuie-glace comprend, sur une extrémité assignée au dispositif d'entraînement une extrémité opposée qui est disposée sur une glissière, de préférence de manière à coulisser.

6. Dispositif d'essuyage selon l'une quelconque des revendications précédentes, **caractérisé en ce que** l'essuie-glace est conçue de manière á être déployable télescopiquement, ledit essuie-glace étant de préférence conçu de telle sorte qu'indépendamment du degré de déploiement de l'essuie-glace, au moins un balai de l'essuie-glace s'appuie contre le pare-brise, deux balais d'essuie-glace à un ou plusieurs segments au moins en particulier étant prévus qui sont disposés de façon décalée l'un par rapport à l'autre et déplaçables l'un vers l'autre tout en restant parallèles.

7. Dispositif d'essuyage selon l'une quelconque des revendications précédentes, **caractérisé en ce que** l'essuie-glace sur le dispositif d'entraînement est agencé de façon à pouvoir pivoter dans un plan parallèle au pare-brise, un entraînement de pivotement en particulier étant prévu.

8. Dispositif d'essuyage selon l'une quelconque des revendications précédentes, **caractérisé en ce que**
a) des moyens de mesure sont prévus pour la direction du flux et des moyens de commande qui règlent le pivotement en fonction de la direction du flux de telle sorte que l'essuie-glace est aligné de manière automatique parallèlement à la direction du flux et/ou
b) des moyens sont prévus pour adapter le pivotement en fonction de la vitesse du véhicule de telle sorte que l'essuie-glace est aligné parallèlement à la direction du flux.

9. Dispositif d'essuyage selon l'une quelconque des revendications précédentes, **caractérisé en ce que** le changement d'alignement de l'essuie-glace se fait de manière abrupte et/ou **en ce que** des moyens de mesure et de commande sont prévus qui définissent la résistance sur l'essuie-glace par la matière à essuyer et déclenchent l'impulsion dès le dépassement d'une résistance fixée et ajustent ce faisant sa taille de manière à éliminer la matière à essuyer.

10. Dispositif d'essuyage selon l'une quelconque des revendications précédentes, **caractérisé en ce qu'**une position parking, libérant le champ de vision du pare-brise, et de préférence conçue de manière chauffée et/ou protégée, est prévue pour l'essuie-glace.

11. Procédé d'essuyage des moyens de vue à travers de véhicules automobiles, dispositifs de protection et autres dispositifs similaires avec au moins un essuie-glace qui est agencé avec un moyen d'attache sur un dispositif d'entraînement, un dispositif d'entraînement avec au moins une section d'entraînement étant utilisé, ladite section d'entraînement comportant une extension longitudinale, le moyen d'attache étant déplacé de façon linéaire le long au moins d'une partie de l'extension longitudinale, **caractérisé en ce que**
- l'essuie-glace est pivoté au moins le long d'une partie de sa trajectoire d'essuyage dans au moins deux positions différentes sur la trajectoire d'essuyage de telle sorte que l'essuie-glace est aligné parallèlement à un flux affluant,
- l'alignement de l'essuie-glace est modifié de telle sorte qu'une telle impulsion est transmise à la matière à essuyer, en particulier la neige, et conduit à une élimination de la matière à essuyer du pare-brise, et/ou
- l'essuie-glace est pivoté de telle sorte qu'une surface d'essuyage quasiment complète est obtenue même avec un moyen de vue á travers ayant une géométrie compliqué.

12. Procédé selon la revendication 11, **caractérisé en ce qu'**un dispositif d'essuyage selon l'une des revendications 1 à 9 est utilisé.
